(19) Europäisches Patentamt

European Patent Office

Office européen des brevets

(11) **EP 1 273 930 B1**

(12) **EUROPEAN PATENT SPECIFICATION**

(45) Date of publication and mention
of the grant of the patent:
**03.11.2004 Bulletin 2004/45**

(51) Int Cl.⁷: **G01S 13/93**

(21) Application number: **01116303.7**

(22) Date of filing: **05.07.2001**

(54) **A method for collision avoidance and collision mitigation**

Verfahren zur Vermeidung und Verringerung von Kollisionen

Méthode pour éviter et atténuer des collisions

(84) Designated Contracting States:
**DE GB SE**

(43) Date of publication of application:
**08.01.2003 Bulletin 2003/02**

(73) Proprietor: **Ford Global Technologies, LLC
Dearborn, MI 48126 (US)**

(72) Inventors:
 • **Jansson, Jonas
   41464 Göteborg (SE)**
 • **Johansson, Jonas
   42470 Olofstorp (SE)**

(74) Representative: **Lindberg, Klas Valter Bo
 Awapatent AB
 P.O. Box 11394
 404 28 Göteborg (SE)**

(56) References cited:
EP-A- 0 544 468    US-A- 4 623 966
US-A- 5 596 332    US-A- 5 613 039
US-A- 6 026 347    US-A- 6 085 151

• SEKI ET AL: "Collision avoidance system for
vehicles applying model predictive control
theory" INTELLIGENT TRANSPORTATION
SYSTEMS, 1999. PROCEEDINGS. 1999
IEEE/IEEJ/JSAI INTERNATIONAL
CONFERENCE ON TOKYO, JAPAN 5-8 OCT.
1999, PISCATAWAY, NJ, USA,IEEE, US, 5
October 1999 (1999-10-05), pages 453-458,
XP010369937 ISBN: 0-7803-4975-X
• JOCOY ET AL: "Adapting radar and tracking
technology to an on-board automotive collision
warning system" DIGITAL AVIONICS SYSTEMS
CONFERENCE, 1998. PROCEEDINGS., 17TH
DASC. THE AIAA/IEEE/SAE BELLEVUE, WA,
USA 31 OCT.-7 NOV. 1998, NEW YORK, NY,
USA,IEEE, US, 31 October 1998 (1998-10-31),
pages I24-1-I24-8, XP010318162 ISBN:
0-7803-5086-3

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 273 930 B1

**Description**

Technical field

The present invention relates to a method for avoiding collisions and collision mitigation involving vehicles and other objects. Specifically, the method is focused on predicting the probability density function for said vehicles and objects.

Technical background

Several methods have been developed for collision avoidance utilizing sensors to obtain values such as distance, speed and direction of objects and vehicles.

US 4,623,966 discloses an apparatus for collision avoidance for marine vessels. This apparatus comprises sensing means for providing signals representative of the positions and velocities of other vehicles relative to a first vehicle. These signals are used in a deterministic way to assess maneuvers of the first vehicle, which will avoid collision with the other vehicles. Collision danger is assessed through measures such as closest passing point, predicted point of collision and predicted areas of danger.

Radar and laser are utilized in the invention disclosed in US 5,471,214 to detect objects within a specific range of the vehicle equipped with the collision avoidance system. The Kalman filter is used to estimate relative future positions of the vehicles. A maximum danger region is defined and presence of an object in this region results in an alarm signal. Further, the invention is focused on the sensor set-up.

A similar system is disclosed in US 5,596,332. The Kalman filter is utilized to predict future probable positions of aircrafts. If the future probable position (a volume) at a specific time of an aircraft overlaps the future probable position at the same time for another aircraft, an alarm signal is generated. GPS is used to determine earth coordinates for the aircrafts.

US 6,026,347 discloses a method for use in vehicles to avoid collisions with obstacles. The method applies to automated vehicles driving in the same direction in two or more lanes. Each vehicle includes a processor that is coupled to the vehicle's braking, steering and engine management systems that can accept commands from other vehicles to brake, accelerate, or change lanes. The invention mainly concerns how coordination of maneuvers between several vehicles during avoidance maneuver should be managed.

In US 6,085,151 a collision sensing system is disclosed where the probability of threat and the type of threat are computed, the result of which is used to perform an appropriate action, such as seat belt pretensioning, airbag readying and inflating, and braking. Thus, the main focus of the patent is preparing the vehicle for collision in order to enhance the safety. Individual targets are identified by clustering analysis and are tracked in a Cartesian coordinate system using a Kalman filter.

According to a paper by Jocoy et al, "Adapting radar and tracking technology to an on-board automotive collision warning system", in: The AIAA/IEEE/SAE Digital Avionics systems Conference, 1998, Vol. 2, pp I24-1 - I24-8, the intersection collisions constitute approximately twenty-six percent of all accidents in the United States. A system is under development, which consists of a single radar assembly that will monitor vehicle traffic along the approaching lanes of traffic. A metric of gap time based on predicted time of arrival at the intersection is used to provide a warning to the driver. The measure used to detect threats is predicted as time to and out of the intersection.

A prediction system, which allows the evaluation of collision and unhooking risks in the automatic control of truck platoons on highways, is described in a paper by Attouche et al, "A prediction system based on vehicle sensor data in automated highway", In: 2000 IEEE Intelligent Transportation Systems, Conference Proceedings, 1-3 Oct. 2000, pp 494-499. The system applies to a concentration of trucks travelling in the same direction for long distances and comprises an inter-truck spacing signal obtained by a triple measurement device: a laser range-finder, an embedded camera and a theoretical observer, based on system dynamic equations.

A paper by Seki et al., "Collision avoidance system for vehicles applying model predictive control theory", In: 1999 IEEE/IEEJ/JSAI International Conference on Intelligent Transportation Systems, pp 453-458, describes a similar system for avoiding collisions with vehicles or objects travelling in the same direction as the vehicle equipped with the collision avoidance system. What is discussed is mainly how to control the braking force, given some target stopping point which is given by some safe deceleration rate plus surplus distance.

All of the above described prior art collision avoidance systems and methods either are dependant of external signal transmitters, for example GPS satellite communication or communication between vehicles equipped with collision avoidance systems, or they result in giving alarm signals too frequently when implemented in an automobile. All of the prior art systems or methods have difficulties handling situations like a vehicle meeting another vehicle travelling in the opposite direction on a two way road. If a collision avoidance system or method were to give an alarm signal every time the vehicle equipped with such a system meets another vehicle, this would be a nuisance to the driver and

EP 1 273 930 B1

could result in the driver shutting down the collision avoidance function and not using it at all.

US 5,613,039 discloses a method and a device for avoiding vehicle collisions and collision mitigation, comprising the steps of predicting the probability density function for the position of a vehicle and predicting the probability density function for the position of at least one additional object.

Summary of the invention

The object of the present invention is to provide a collision avoidance method that is capable of handling situations like the above described with a low rate of false alarms. A further object is to provide a method for mitigation of the collision if unavoidable. An object is also to provide a collision avoidance method independent of external signal transmitters.

These objects are achieved by the method set forth in the appended claims.

The inventive method comprises the step of predicting the probability density function for the position of a vehicle at several future occasions. Current velocity, change in velocity, position, size, direction and rate of direction change are taken into consideration when predicting the probability density function of the vehicle. This probability can be illustrated with a three dimensional plot of a probability distribution, for example a Gaussian normal distribution, where the peak corresponds to the most probable position of the vehicle at a certain time.

The inventive method also comprises the step of predicting the probability density function for at least one additional object at several future occasions. The object could for example be another vehicle the probable position of which is predicted at each of a plurality of times subsequent to detection synchronized with the predicted instants of the vehicle. The detection could be made by for example radar or laser. Current velocity, change in velocity, position, size, direction and rate of direction change are taken into consideration when predicting the probability density function of another object or objects.

The next step according to the method of the present invention is forming the joint probability density function for the relative positions of the vehicle and object at several future occasions. The time increment between said occasions are preferably small enough in order to find minimum distance between the two peaks (the maximum probability for each of the two probability density functions) of the probability density functions.

The next step according to the inventive method is to integrate the joint probability density function over the area in which the vehicle and the object are in physical conflict. The probability of collision is thereby calculated and can be used as a measure for basing decisions upon. The result from the calculation is a value between 0 and 1 where 0 means 0% probability of collision and 1 means 100% probability of collision.

One of the actions to avoid collision could be braking, but depending on the speed an evasive action might be more suitable. The distance needed to brake to a full stop increases radically with increased speed. However, the distance needed to make an evasive maneuver increases linearly with the speed and at speeds higher than approximately 40 km/h (~25 mph) the distance needed to make an evasive maneuver is shorter than the distance needed to brake in order to avoid a collision.

The other object could be another vehicle or several vehicles. A normal situation where one vehicle meets another vehicle on a two-way road should not result in an alarm signal or automatic action unless on collision course.

Fixed objects such as road signs and guardrails can also be included in the calculation as objects. The same applies to fixed objects as to vehicles as regards false alarms.

The calculation can preferably be made taking several vehicles, fixed objects and moving objects into account, i.e. the method according to the present invention can be used in real situations.

Brief description of the figures

The method according to the present invention is explained below in more detail with reference to the figures, which show the various steps in the method, wherein:

Figure 1 shows a top view of two vehicles meeting on a straight road.

Figure 2 shows a three-dimensional plot of the probability density functions for the vehicles in figure 1 at four different times.

Figures 3a and 3b show the probability density function in one direction for each of the two vehicles respectively at the four different times shown in figure 2.

Figures 4a-4d show for each of the four times in figure 2 the probability density function in one direction for each of the two vehicles.

Figures 5a-5d show the joint probability function in one direction for the two vehicles at the four different times shown in figure 2.

Description of the preferred embodiments

The method according to the invention will be explained with reference made to an example illustrated in the enclosed figures. The example is chosen in order to facilitate the reading and understanding of the method according to the present invention. Therefore, most of the diagrams in the figures show the probability density functions in one direction.

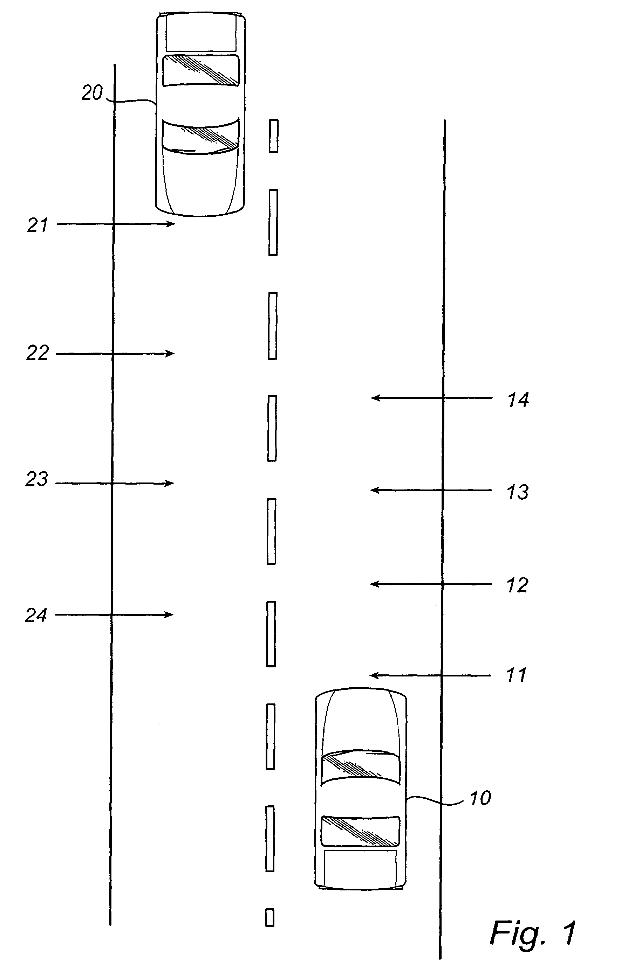

Figure 1 illustrates a common situation with two vehicles meeting on a straight road. The vehicle equipped with the collision avoidance system is denoted 10 and the other vehicle is denoted 20. Throughout the example the probability density function has been calculated for both the vehicles at four future occasions (the same for both vehicles). The four future occasions are denoted 11, 12, 13 and 14, for the vehicle equipped with the collision avoidance system, with the same time interval between the future occasions. For the other vehicle the four future occasions are denoted 21, 22, 23 and 24. The occasion 11 for the first said vehicle corresponds to occasion 21 for the other said vehicle and so forth for 12, 13 and 14. A time increment of 0.05 s in the example results in the velocities ~70 km/h and ~100 km/h (~45 mph and ~mph) for the vehicle equipped with the collision avoidance system and the other vehicle respectively.

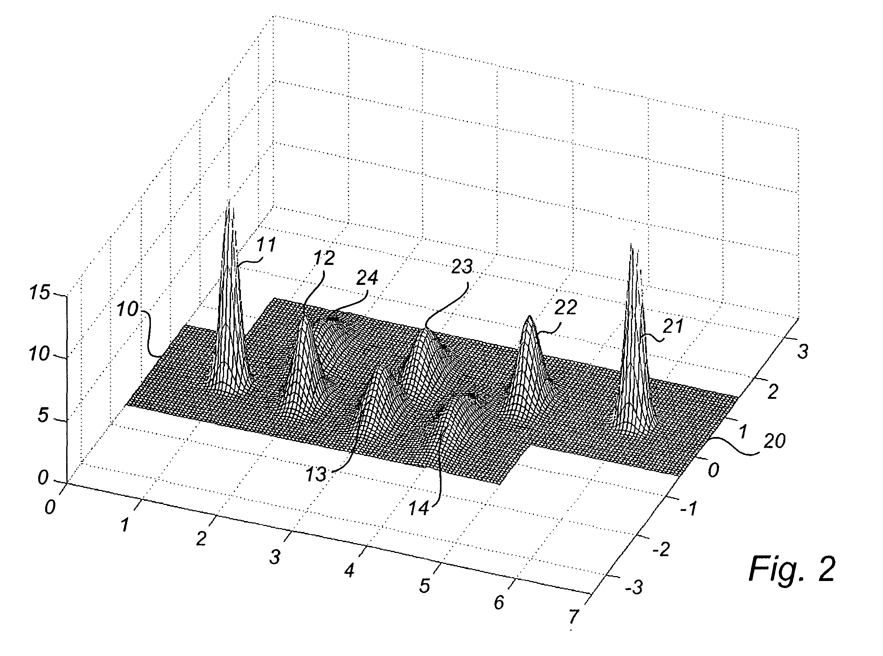

In figure 2 the probability density functions have been calculated for the vehicles at the four said future occasions and they are illustrated in this three-dimensional plot. The probability density functions 11 and 21 are the ones closest in time to the present location and thus the peaks are higher than for the functions 12, 13, 14, 22, 23 and 24, i.e. the probabilities are high for the vehicles to be in this area. Contrary, the peaks of the probability density functions 14 and 24 are lower but the functions are on the other hand wider, i.e. the further away in the future the more alternative positions. The probability that the vehicle ends up in a specific position is lower since the time difference between the present position and the future position is long and therefore larger changes can occur, for example changes in direction and velocity.

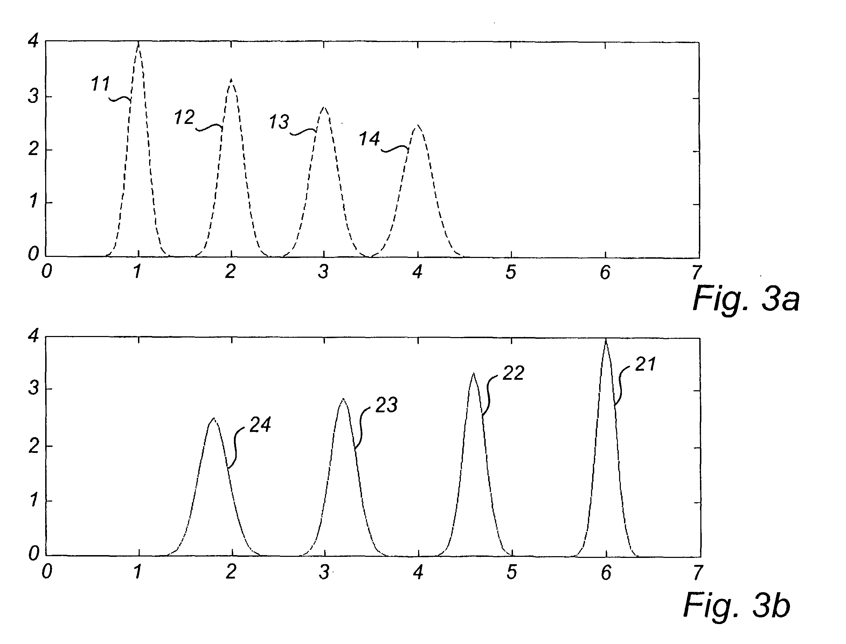

In figure 3a the probability density functions are shown in the direction of the vehicle equipped with the collision avoidance system at the four future occasions. Figure 3b illustrates the corresponding probability density functions for the other vehicle.

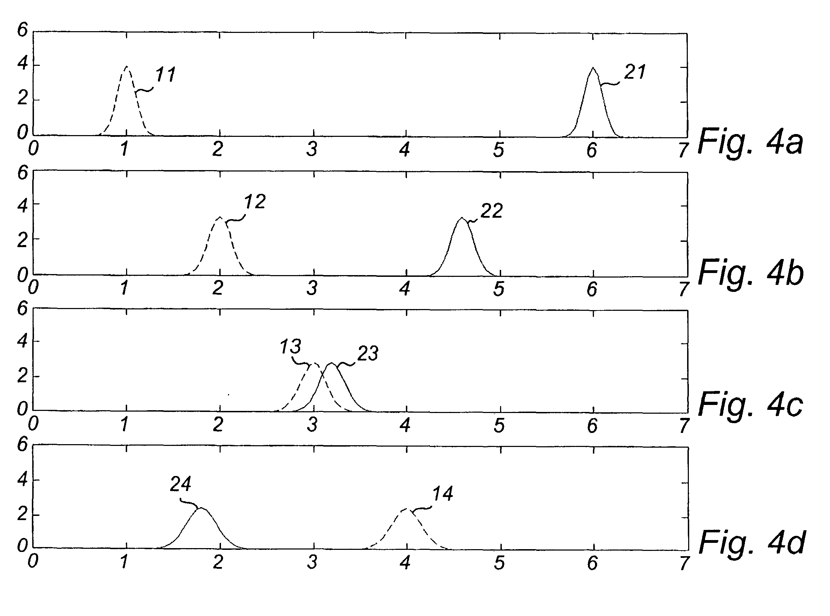

In figures 4a-4b the probability density functions have been divided up into four separate diagrams showing the probability density functions for both vehicles but where one diagram illustrates only one point in time. Thus, figure 4a shows the probability density functions 11 and 21, the closest in time to the present positions of the vehicles. Hence, the diagram in Figure 4b shows the probability density functions 12 and 22, the diagram in figure 4c shows the probability density functions 13 and 23 and the diagram in figure 4d shows the probability density functions 14 and 24. Preferably the time intervals are chosen short. In figure 4c the probability density functions of the vehicles partly overlap each other. If, for example, the time interval had been twice as long (figures 4b and 4d) the probability density functions would pass each other, which then would result in a possible danger not being discovered. However, the calculations are repeated continuously with a frequency large enough to avoid such risks.

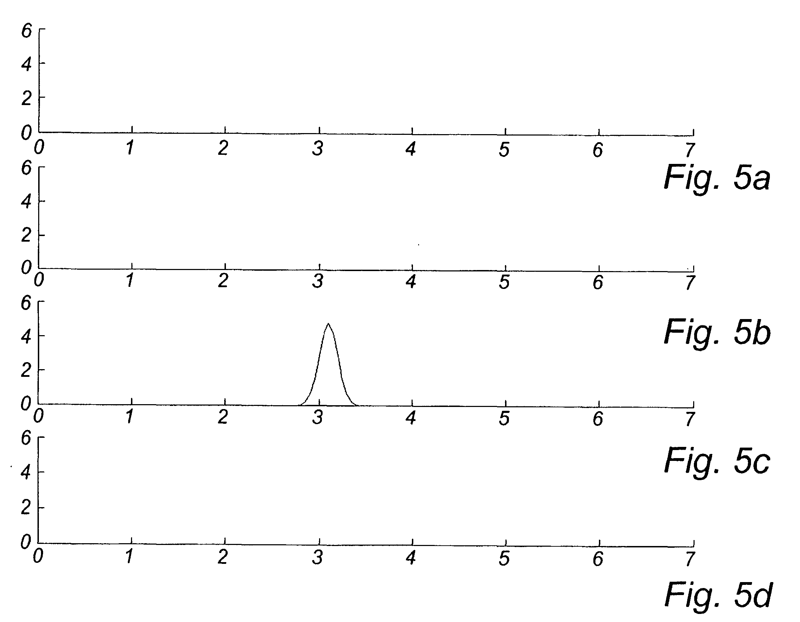

Some prior art calculations are carried out in a similar way, i.e. the probability density functions are calculated for the vehicles. However, using prior art on the example here would result in an alarm caused by the overlapping probability density functions 13 and 23 in figure 2 if the confidence interval is large. It is not desirable for a driver of a vehicle equipped with a collision avoidance system to have a warning signal every time said vehicle meets another vehicle in a situation similar to that in the example shown. The confidence interval might be chosen not to give warning signals in specific situations, but this will result in a relatively insensitive system that will fail to warn in some situations where a warning signal should be the result. According to the present invention a joint probability density function is therefore calculated for each of the future occasions. Figures 5a-5d show the joint probability density functions for one direction (traveling direction) in the example with four future occasions. The joint probability density function is integrated over the area in which the vehicle and object are in physical conflict. The output of the calculation indicate the probability of collision. However, figure 5c is the only figure showing any signal at all. Preferably a preset limit of when to alarm is chosen higher than the calculated probability in the example, since the situation is not one where an alarm signal is desired. An alarm signal in a normal situation like this when the probability of collision is very low would be most annoying to the driver. However, the example shows only the probability density functions in only one direction. The probability of collision taking two dimensions into consideration, in the example illustrated, is much lower. The probability density functions 13 and 23 seen along the traveling direction in figure 2 barely overlap. On the other hand, seen from the direction perpendicular to the traveling direction, as shown in figure 4c, the probability density functions overlap considerably.

Thus, the probability of collision for the vehicle and each of the surrounding objects should be calculated for a sufficient number of future occasions. Based on this, rules are set in the probability domain on when to take evasive action or brake. The probability density function can for example be calculated by using the extended Kalman filter to predict the vehicles and surrounding objects future positions as well as their associated covariance matrix. The following is an example describing such a calculation. Calculating the probability density function using the Kalman filter is a relatively simple method. Much more sophisticated methods can be used instead but the simple method is used to facilitate the understanding of the concept according to the present invention. The algorithm uses the following discrete state space description for the vehicle and other objects:

$$X_t = \begin{pmatrix} x_t \\ y_t \\ v_{x,t} \\ v_{y,t} \\ \omega_t \end{pmatrix}$$

where:

$x_t$=$x_t$ coordinate in a ground fixed coordinate system
$y_t$=$y_t$ coordinate in a ground fixed coordinate system
$v_{x,t}$=velocity in the x direction
$v_{y,t}$ = velocity in the y direction
$\omega_t$ = rate of direction change

$$X_{t+T} = \begin{pmatrix} 1 & 0 & \dfrac{\sin(\omega_t T)}{\omega_t} & \dfrac{-(1-\cos(\omega_t T))}{\omega_t} & \dfrac{v_x T\cos(\omega_t T)}{(\omega_t - \sin(\omega_t T))\omega_t^2} - \dfrac{v_y T\sin(\omega_t T)}{(\omega_t -(1-\cos(\omega_t T)))\omega_t^2} \\ 0 & 1 & \dfrac{1-\cos(\omega_t T)}{\omega_t} & \dfrac{\sin(\omega_t T)}{\omega_t} & \dfrac{v_x T\sin(\omega_t T)}{\omega_t -(1-\cos(\omega_t T)\omega_t^2)} - \dfrac{v_y T\cos(\omega_t T)}{\omega_t - \sin(\omega_t T)\omega_t^2} \\ 0 & 0 & \cos(\omega_t T) & -\sin(\omega_t T) & -v_x T\sin(\omega_t T)-v_y T\cos(\omega_t T) \\ 0 & 0 & \sin(\omega_t T) & \cos(\omega_t T) & v_x T\cos(\omega_t T)-v_y T\sin(\omega_t T) \\ 0 & 0 & 0 & 0 & 1 \end{pmatrix} X_t$$

$$= AX_t$$

The extended Kalman filter is used to predict the future positions of the vehicle and the objects. The Kalman filter prediction is iterated n times to obtain the vehicles position at the times T, 2T, ..., nT. For example, n is chosen so that nT is the same or slightly longer than the time it takes to come to a full stop given the speed, braking capabilities and the tire to road friction of the vehicle.

The main purpose of the decision-making algorithm is to get a measure of when to execute an avoidance maneuver or to make an alarm. The probability of the future positions of the vehicle and the object/objects being close to one another in the X and Y direction can be calculated as follows (in this example the coordinate system is fixed to the collision avoidance vehicle):

$$P_x\big(|\Delta X| < a+b\big) = \int_{-a-b}^{a+b} f(\Delta X)$$

$$P_y\big(|\Delta Y| < c+d\big) = \int_{-c-d}^{c+d} f(\Delta Y)$$

where:

$\Delta X$ = distance between the vehicle and the object in the X direction
$\Delta Y$ = distance between the vehicle and the object in the Y direction
$a$ = half the width of the vehicle
$b$ = half the width of the object
$c$ = half the length of the vehicle
$d$ = half the length of the object

$$f(\Delta X) = \frac{1}{\sigma_x \sqrt{2\pi}} \; e^{\frac{-\Delta X^2}{2\sigma_x^2}} =$$

the probability density function of $\Delta X$

$$f(\Delta X) = \frac{1}{\sigma_y \sqrt{2\pi}} \; e^{\frac{-\Delta Y^2}{2\sigma_y^2}} =$$

the probability density function of $\Delta Y$

$\sigma_x$ and $\sigma_y$ are given by the (1, 1) and (2, 2) elements of the covariance matrix of $X_t$, $P_t$. The threshold for collision avoidance maneuver can be set to alarm when the probability $P_x$ and $P_y$ are greater than some values $T_x$ and $T_y$. $T_x$ and $T_y$ are design parameters who should be dependent on the velocity of the vehicle.

The foregoing is a disclosure of an example practicing the present invention. However, it is apparent that method incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims.

**Claims**

1. A method for avoiding vehicle collisions and collision mitigation, comprising the following steps:

   - predicting the probability density function (11, 12, 13, 14) for the position of a vehicle; and
   - predicting the probability density function (21, 22, 23, 24) for the position of at least one additional object,

   **characterised by**
   that said probability density functions (11, 12, 13, 14, 21, 22, 23, 24) are calculated for several future occasions and that it further comprises the steps of:

   - forming the joint probability density function for the relative positions of the vehicle and object at said several future occasions; and
   - integrating the joint probability density function over the area in which the vehicle and the object are in physical conflict.

2. A method as claimed in claim 1, wherein said object is a vehicle.

3. A method as claimed in claim 1, wherein said object is a fixed object.

4. A method as claimed in claim 1, wherein the probability density function is predicted for several vehicles, fixed objects and moving objects.

5. A method as claimed in claim 1, wherein said physical range corresponds to the total width and length of the vehicle and the object.

**6.** A method as claimed in claim 1, wherein said probability density function (11, 12, 13, 14, 21, 22, 23, 24) is approximated with the Gaussian normal distribution.

**7.** A method as claimed in claim 1, wherein the probability density function (11, 12, 13, 14, 21, 22, 23, 24) is calculated using the Kalman filter.

**8.** A method as claimed in claim 7, wherein the Kalman filter is used to calculate the covariance matrix of the vehicle and the object.

**9.** A method as claimed in claim 1, wherein the o method also comprises the step of taking a suitable course of action for the specific situation.


**Patentansprüche**

**1.** Verfahren zum Vermeiden und zur Verringerung von Fahrzeugkollisionen, das die folgenden Schritte umfasst:

- Vorhersagen der Wahrscheinlichkeitsdichtefunktion (11, 12, 13, 14) für die Position eines Fahrzeugs, und
- Vorhersagen der Wahrscheinlichkeitsdichtefunktion (21, 22, 23, 24) für die Position wenigstens eines zusätzlichen Objekts,

**dadurch gekennzeichnet, dass**
die Wahrscheinlichkeitsdichtefunktionen (11, 12, 13, 14, 21, 22, 23, 24) für mehrere zukünftige Ereignisse berechnet werden und dass es ferner die folgenden Schritte umfasst:

- Bilden der gemeinsamen Wahrscheinlichkeitsdichtefunktion für die relativen Positionen des Fahrzeugs und des Objekts bei den mehreren zukünftigen Ereignissen, und
- Integrieren der gemeinsamen Wahrscheinlichkeitsdichtefunktion über die Fläche, in der sich das Fahrzeug und das Objekt in physischem Konflikt befinden.

**2.** Verfahren nach Anspruch 1, wobei das Objekt ein Fahrzeug ist.

**3.** Verfahren nach Anspruch 1, wobei das Objekt ein festes Objekt ist.

**4.** Verfahren nach Anspruch 1, wobei die Wahrscheinlichkeitsdichtefunktion für mehrere Fahrzeuge, feste Objekte und sich bewegende Objekte vorhergesagt wird.

**5.** Verfahren nach Anspruch 1, wobei der physische Bereich der Gesamtbreite und der Gesamtlänge des Fahrzeugs und des Objekts entspricht.

**6.** Verfahren nach Anspruch 1, wobei die Wahrscheinlichkeitsdichtefunktion (11, 12, 13, 14, 21, 22, 23, 24) mit der gaußschen Normalverteilung angenähert wird.

**7.** Verfahren nach Anspruch 1, wobei die Wahrscheinlichkeitsdichtefunktion (11, 12, 13, 14, 21, 22, 23, 24) mit Hilfe des Kalmanfilters berechnet wird.

**8.** Verfahren nach Anspruch 7, wobei der Kalmanfilter verwendet wird, um die Kovarianzmatrix des Fahrzeugs und des Objekts zu berechnen.

**9.** Verfahren nach Anspruch 1, wobei das Verfahren außerdem den Schritt umfasst, eine für die konkrete Situation geeignete Vorgehensweise zu verwenden.


**Revendications**

**1.** Méthode pour éviter des collisions de véhicules et atténuer des collisions, comprenant les étapes suivantes consistant à :

- prédire la fonction de densité de probabilité (11, 12, 13, 14) pour la position d'un véhicule ; et
- prédire la fonction de densité de probabilité (21, 22, 23, 24) pour la position d'au moins un objet supplémentaire,

**caractérisée en ce**

**que** lesdites fonctions de densité de probabilité (11, 12, 13, 14, 21, 22, 23, 24) sont calculées pour plusieurs occasions futures et en ce qu'elle comprend en outre les étapes consistant à:

- former la fonction de densité de probabilité commune pour les positions relatives du véhicule et de l'objet lors desdites plusieurs occasions futures ; et
- intégrer la fonction de densité de probabilité commune sur la zone dans laquelle le véhicule et l'objet sont en conflit physique.

2. Méthode selon la revendication 1, dans laquelle ledit objet est un véhicule.

3. Méthode selon la revendication 1, dans laquelle ledit objet est un objet fixe.

4. Méthode selon la revendication 1, dans laquelle la fonction de densité de probabilité est prédite pour plusieurs véhicules, objets fixes et objets mobiles.

5. Méthode selon la revendication 1, dans laquelle ladite plage physique correspond à la largeur et longueur totales du véhicule et de l'objet.

6. Méthode selon la revendication 1, dans laquelle ladite fonction de densité de probabilité (11, 12, 13, 14, 21, 22, 23, 24) est calculée par approximation avec la distribution normale de Gauss.

7. Méthode selon la revendication 1, dans laquelle la fonction de densité de probabilité (11, 12, 13, 14, 21, 22, 23, 24) est calculée en utilisant le filtre de Kalman.

8. Méthode selon la revendication 7, dans laquelle le filtre de Kalman est utilisé pour calculer la matrice de covariance du véhicule et de l'objet.

9. Méthode selon la revendication 1, dans laquelle la méthode comprend également l'étape consistant à prendre une action appropriée pour la situation spécifique.

Fig. 1

Fig. 2

Fig. 3a

Fig. 3b

Fig. 4a

Fig. 4b

Fig. 4c

Fig. 4d

*Fig. 5a*

*Fig. 5b*

*Fig. 5c*

*Fig. 5d*